(19) **Europäisches Patentamt / European Patent Office / Office européen des brevets**

(11) **EP 2 669 887 A2**

(12) # EUROPEAN PATENT APPLICATION

(43) Date of publication:
**04.12.2013 Bulletin 2013/49**

(51) Int Cl.:
**G09G 5/00** (2006.01)

(21) Application number: **13275119.9**

(22) Date of filing: **16.05.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2012 KR 20120057541**

(71) Applicant: **Samsung Electro-Mechanics Co., Ltd. Gyeonggi-do (KR)**

(72) Inventors:
- **Kim,, Gyu Won**
  **443-743 Gyeonggi-do, (KR)**
- **Ha,, Joo Young**
  **443-743 Gyeonggi-do, (KR)**
- **Min,, Kyoung Joong**
  **443-743 Gyeonggi-do, (KR)**

(74) Representative: **Potter Clarkson LLP**
**The Belgrave Centre**
**Talbot Street**
**Nottingham**
**NG1 5GG (GB)**

(54) **On-Screen display device and on-screen display method**

(57) Disclosed herein is a technology of reflecting a line width of an on-screen display (OSD) image to calculate an appropriate interpolation rate and interpolating the OSD image according to the calculated interpolation rate to output the interpolated OSD image, in order to provide an OSD image smoother as compared to the case according to the related art by smoothly displaying an OSD image to reduce image shaking.

【FIG. 2】

EP 2 669 887 A2

**Description**

CROSS REFERENCE(S) TO RELATED APPLICATIONS

This application claims the benefit under 35 U.S.C. Section 119 of Korean Patent Application Serial No. 10-2012-0057541, entitled "On-Screen Display (OSD) Device and OSD Display Method" filed on May 30, 2012, which is hereby incorporated by reference in its entirety into this application.

BACKGROUND OF THE INVENTION

1. Technical Field

The present invention relates to an on-screen display (OSD) device and an OSD display method.

2. Description of the Related Art

Recently, various technologies related to an on-screen display (OSD) have been suggested in Patent Document 1, Patent Document 2, Patent Document 3, and the like.
However, in products according to the related art to which the OSD is applied, since rough portions such as a line, a letter, and the like, of an image are displayed at they are without being subjected to a separate interpolation process, the image is unnatural and a contour portion of the image is not smooth.

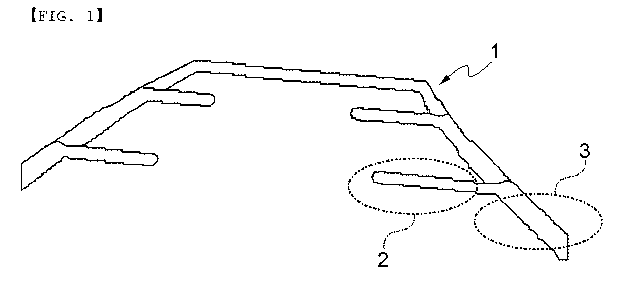

FIG. 1 is a view schematically showing an OSD image according to the related art. Referring to FIG. 1, in the case in which the OSD image is output as it is in a state in which it is not interpolated, a phenomenon that a line is roughly displayed may be confirmed in a region denoted by a reference numeral 2, a region denoted by a reference numeral 3, and the like.
This unnatural OSD image causes fatigue to eyes of a user and is viewed as if it is shaken due to a sporadic change in pixels.
Meanwhile, in the case of the technology suggested in Patent Document 3, an OSD image is stored in a bitmap format, such that there is a limitation in view of data storage capacity and data processing efficiency.

[Related Art Document]

[Patent Document]

    (Patent Document 1) Korea Patent Laid-open Publication No. 10-2010-0038981
    (Patent Document 2) Korea Patent Laid-open Publication No. 10-2010-0006845
    (Patent Document 3) Korea Patent Laid-open Publication No. 10-2010-0129965

SUMMARY OF THE INVENTION

Au object of the present invention is to provide an on-screen display (OSD) device and an OSD display method capable of providing an image smoother as compared to the case according to the related art by smoothly displaying an OSD image to reduce image shaking.
According to an exemplary embodiment of the present invention, there is provided an on-screen display (OSD) device including: a camera; a storing unit storing first data therein, the first data being generated by encoding an OSD image; a decoder connected to the storing unit and decoding the first data; a line width calculating unit connected to the decoder and calculating a line width of the OSD image from second data generated by decoding the first data; an interpolation rate calculating unit connected to the line width calculating unit and reflecting the line width calculated in the line width calculating unit to calculate an interpolation rate; an image generating unit connected to the interpolation calculating unit and interpolating the OSD image according to the interpolation rate calculated in the interpolation rate calculating unit to generate an interpolated image; an image combining unit connected to the image generating unit and the camera and combining the image generated in the image generating unit with an image photographed in the camera; and a displaying unit connected to the image combining unit and outputting the image combined in the image combining unit.
The first data may be data generated by encoding the OSD image in an MRLC format including color information, a data width, and a blank width.
The line width calculating unit may calculate the line width by extracting color information and a width of data having the corresponding color information from the second data.
The interpolation rate calculating unit may calculate a width of an interpolation target region using the following Equation 1: $Y2 = LW - (LW/K1)$, where $Y2$ indicates the width of the interpolation target region, $LW$ indicates the line width calculated in the line width calculating unit, and $K1$ indicates a first coefficient.
The interpolation rate calculating unit may calculate the interpolation rate so that a color is gradually weakened toward a direction that becomes distant from the center of a line of the OSD image with respect to the interpolation target region.
The first coefficient may be determined to be in inverse proportion to the line width in a range between 1 and 2.
According to another exemplary embodiment of the present invention, there is provided an OSD device including: a camera; a storing unit storing first data therein, the first data being generated by encoding an OSD image in an MRLC format including color information, a data width, and a blank width; a decoder connected to the storing unit and decoding the first data; a scaler connected to the decoder and increasing or decreasing a data width and a blank width in second data generated by decoding the first data to generate third data; a line width calculating unit connected to the scaler and calculating a line width of the OSD image from the third data; an interpolation rate calculating unit connected to the line width calculating unit and reflecting the line width calculated in the line width calculating unit to calculate an interpolation rate; an image generating unit connected to the interpolation calculating unit and interpolating the OSD image according to the interpolation rate calculated in the interpolation rate calculating unit to generate an interpolated image; an image combining unit connected to the image generating unit and the camera and combining the image generated in the image generating unit with an image photographed in the camera; and a displaying unit connected to the image combining unit and outputting the image combined in the image combining unit.

The line width calculating unit may calculate the line width by extracting color information and a width of data having the corresponding color information from the third data.

The interpolation rate calculating unit may calculate a width of an interpolation target region using the following Equation 1: $Y2 = LW - (LW/K1)$, where $Y2$ indicates the width of the interpolation target region, $LW$ indicates the line width calculated in the line width calculating unit, and $K1$ indicates a first coefficient, and the interpolation rate calculating unit may calculate the interpolation rate so that a color is gradually weakened toward a direction that becomes distant from the center of a line of the OSD image with respect to the interpolation target region.

According to still another exemplary embodiment of the present invention, there is provided an OSD method including: a storing step of storing first data generated by encoding an OSD image; a decoding step of decoding the first data to generate second data; a line width calculating step of calculating a line width of the OSD image from second data; an interpolation rate calculating step of reflecting the line width calculated in the line width calculating step to calculate an interpolation rate; an image generating step of interpolating the OSD image according to the interpolation rate calculated in the interpolation rate calculating step to generate an interpolated image; an image combining step of combining an image photographed by a camera and the image generated in the image generating step with each other; and a displaying step of outputting the image combined in the image combining step.

The first data may be data generated by encoding the OSD image in an MRLC format including color information, a data width, and a blank width.

In the line width calculating step, the line width may be calculated by extracting color information and a width of data having the corresponding color information from the second data.

In the interpolation rate calculating step, a width of an interpolation target region may be calculated using the following Equation 1: $Y2 = LW - (LW/K1)$, where $Y2$ indicates the width of the interpolation target region, $LW$ indicates the line width calculated in the line width calculating unit, and $K1$ indicates a first coefficient.

In the interpolation rate calculating step, the interpolation rate may be calculated so that a color is gradually weakened toward a direction that becomes distant from the center of a line of the OSD image with respect to the interpolation target region.

The first coefficient may be determined to be in inverse proportion to the line width in a range between 1 and 2.

According to still another exemplary embodiment of the present invention, there is provided an OSD method including: a storing step of storing first data therein generated by encoding an OSD image in an MRLC format including color information, a data width, and a blank width; a decoding step of decoding the first data to generate second data; a scaling step of increasing or decreasing a data width and a blank width in the second data to generate third data; a line width calculating step of calculating a line width of the OSD image from the third data; an interpolation rate calculating step of reflecting the line width calculated in the line width calculating step to calculate an interpolation rate; an image generating step of interpolating the OSD image according to the interpolation rate calculated in the interpolation rate calculating step to generate an interpolated image; an image combining step of combining an image photographed by a camera and the image generated in the image generating step with each other; and a displaying step of outputting the image combined in the image combining step.

In the line width calculating step, the line width may be calculated by extracting color information and a width of data having the corresponding color information from the third data.

In the interpolation rate calculating step, a width of an interpolation target region may be calculated using the following Equation 1: $Y2 = LW - (LW/K1)$, where $Y2$ indicates the width of the interpolation target region, $LW$ indicates the line width calculated in the line width calculating unit, and $K1$ indicates a first coefficient, and the interpolation rate may be calculated so that a color is gradually weakened toward a direction that becomes distant from the center of a line of the OSD image with respect to the interpolation target region.

The first coefficient may be determined to be in inverse proportion to the line width in a range between 1 and 2.

BRIEF DESCRIPTION OF THE DRAWINGS

FIG. 1 is a view schematically showing an on-screen display (OSD) image according to the related art.
FIG. 2 is a view schematically showing an OSD device according to an exemplary embodiment of the present invention.

FIG. 3 is a view schematically showing an MRLC format applied to the OSD device according to the exemplary embodiment of the present invention or an OSD method according to the exemplary embodiment of the present invention.

FIG. 4 is a view schematically showing the OSD method according to the exemplary embodiment of the present invention.

FIG. 5 is a view schematically showing an OSD image to which the OSD device according to the exemplary embodiment of the present invention or the OSD method according to the exemplary embodiment of the present invention is applied.

DESCRIPTION OF THE PREFERRED EMBODIMENTS

Various advantages and features of the present invention and methods accomplishing thereof will become apparent from the following description of embodiments with reference to the accompanying drawings. However, the present invention may be modified in many different forms and it should not be limited to the embodiments set forth herein. These embodiments may be provided so that this disclosure will be thorough and complete, and will fully convey the scope of the invention to those skilled in the art. Like reference numerals throughout the description denote like elements.

Terms used in the present specification are for explaining the embodiments rather than limiting the present invention. Unless explicitly described to the contrary, a singular form includes a plural form in the present specification. The word "comprise" and variations such as "comprises" or "comprising," will be understood to imply the inclusion of stated constituents, steps, operations and/or elements but not the exclusion of any other constituents, steps, operations and/or elements.

Hereinafter, a configuration and an acting effect of exemplary embodiments of the present invention will be described in more detail with reference to the accompanying drawings.

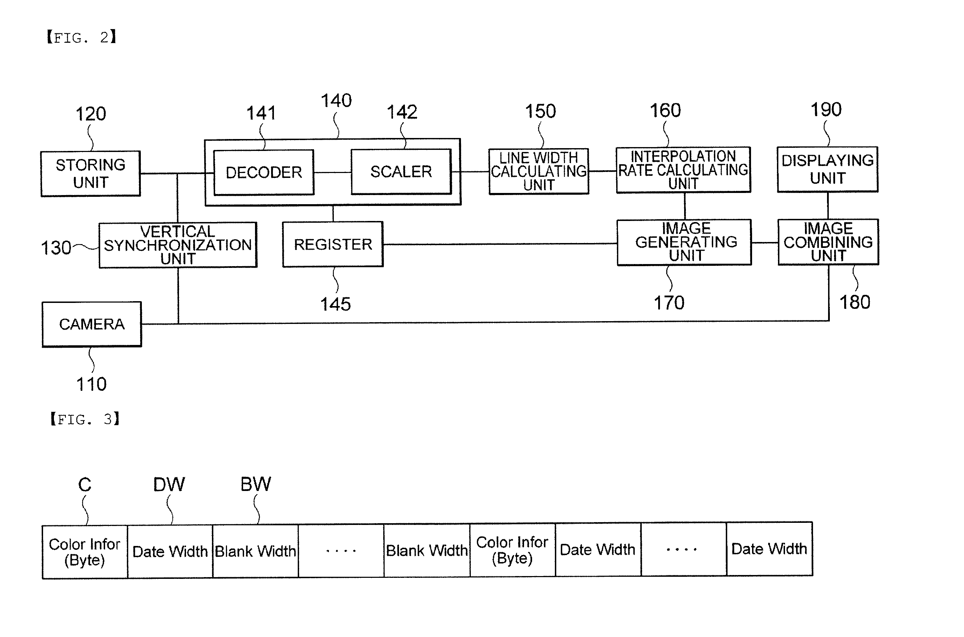

FIG. 2 is a view schematically showing an OSD device according to an exemplary embodiment of the present invention.

Referring to FIG. 2, the OSD device according to the exemplary embodiment of the present invention may include a camera 110, a storing unit 120, a decoder 141, a line width calculating unit 150, an interpolation rate calculating unit 160, an image generating unit 170, an image combining unit 180, and a displaying unit 190.

The camera 110 may be implemented by a general digital camera 110.

In addition, the OSD device according to the exemplary embodiment of the present invention may further include a vertical synchronization unit 130 performing a vertical synchronization function (V sync) in order to naturally display an OSD image and an image photographed by the camera 110 in a finally output image.

The storing unit 120 may be implemented by various data storing devices. However, it is preferable that the storing unit 120 is implemented by a flash memory, or the like, having a relatively rapid data reading/writing speed in order to rapidly process data.

The storing unit 120 may store the OSD image therein. Here, the OSD image may be to display various kinds of information that may be visually provided to a driver at the time of driving of a vehicle, such as a driving guide line, a warning symbol, a warning message, an obstacle indication, and the like.

Meanwhile, in order to store the image in the storing unit 120, an encoding process may be required.

For example, as described in Patent Document 3, the OSD image may be stored in a bitmap format or be encoded and stored in other various formats.

However, at the time of consideration of various conditions such as a cost, a limitation in capacity of a memory that may be applied, and the like, it is preferable that the OSD image is encoded in a format appropriate for the OSD device so as to be more efficiently and rapidly processed in a system.

To this end, the OSD device according to the exemplary embodiment of the present invention may allow the OSD image to be encoded in an MRLC format including color information (C), a data width (DW), and a blank width (BW).

FIG. 3 is a view schematically showing an MRLC format applied to the OSD device according to the exemplary embodiment of the present invention or an OSD method according to the exemplary embodiment of the present invention.

Referring to FIG. 3, it may be understood that the MRLC format is a format in which digital values defining the color information, the data width, and the blank width are continuously arranged.

Therefore, it is possible to reduce required data capacity and improve data processing efficiency, in spite of displaying various OSD images such as a letter, a warning symbol, and the like, including a curve (that is, a dynamic overlay) as well as a static overlay, using various colors.

Meanwhile, hereinafter, for convenience of explanation, data generated by encoding the OSD image will be referred to as first data.

The first data may be stored in the storing unit 120 in advance and be read, decoded, and then used in the case in which it is required in a device. Here, data generated by decoding the first data may be referred to as second data. This decoding process may be performed in a decoder 141 shown in FIG. 2.

Next, the line width calculating unit 150 serves to calculate a line width of the OSD image from the second data. Here, in the case in which the first data are data generated by encoding the OSD data in the MRLC format, the line width calculating unit 150 may calculate the line width by easily extracting color information and a width of data having the corresponding color information from the second data.

Next, the OSD device according to the exemplary embodiment of the present invention performs interpolation for smoothly displaying the OSD image unlike the case according to the related art. In this case, since the entire OSD image needs not to be interpolated, on which region in the OSD image and at which rate the interpolation is performed may be determined.

A role of determining an interpolation target region and an interpolation rate as described above may be performed by the interpolation calculating unit 160.

Particularly, line widths of several lines present in the OSD image may be considered in determining the interpolation target region. In this case, an applied line width may be the line width calculated in the line width calculating unit 150 described above.

In addition, when it is assumed that a width of the interpolation target region is Y2, the line width calculated in the line width calculating unit 150 is LW, and a first coefficient is K1, the width Y2 of the interpolation target region may be calculated by the following Equation 1.

[Equation 1]

$$Y2 = LW - (LW/K1)$$

Meanwhile, the first coefficient may be appropriately adjusted according to the line width and may be preferably determined to be in inverse proportion to the line width in a range between 1 and 2.

That is, in the case in which the line width is 12, when the first coefficient is 2, the width of the interpolation target region may become 6. In this case, each line width of 3 at both edges of a line having a line width of 12 may be determined to be the interpolation target region.

In addition, with respect to the interpolation target region determined as described above, an interpolation rate may be determined so that a color is gradually weakened toward a direction that becomes distant from a central portion of a corresponding line, which may be performed using a modified interpolation lookup table, or the like.

Next, the image generating unit 170 may serve to interpolate the OSD image according to the interpolation rate calculated in the interpolation rate calculating unit 160 to generate an OSD image to be output on an actual screen.

Next, the image combining unit 180 may serve to combine the image generated in the image generating unit 170 with the image photographed in the camera 110. The image combined in the image combining unit 180 may be output through the displaying unit 190 that may be implemented by various types of display devices such as a liquid crystal display (LCD), a light emitting diode (LED), a plasma display panel (PDP), and the like, to thereby be provided to the driver.

Meanwhile, a size of the OSD image may be reduced in order to further reduce capacity of the first data. In this case, in order to combine the image photographed in the camera 110 and the OSD image with each other and output the combined image to the displaying unit 190, the OSD image having the reduced size and stored in the storing unit 120 needs to be enlarged.

To this end, the OSD device according to the exemplary embodiment of the present invention may further include a scaler 142 provided between the decoder 141 and the line width calculating unit 150.

The scaler 142 may increase or decrease a data width and a blank width in the second data at a predetermined rate to generate third data. In this case, since the color information is not changed, a general register 145 is provided, such that the color information may be temporarily stored in the register 145 and then read in the image generating unit 170 to thereby be used in an image generating unit.

In this case, the line width calculating unit 150 may calculate the line width of the OSD image according to the third data.

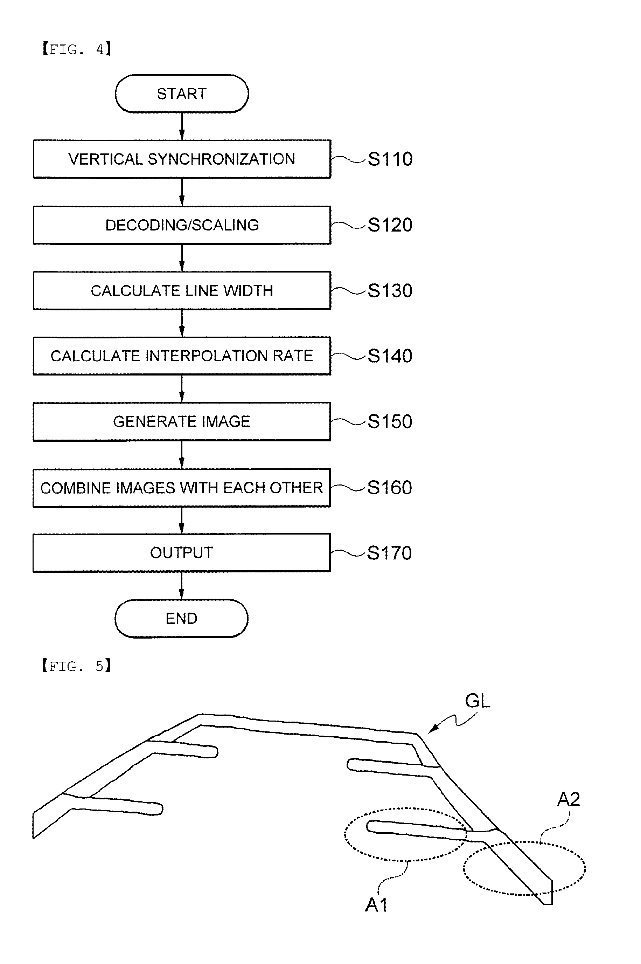

FIG. 4 is a view schematically showing the OSD method according to the exemplary embodiment of the present invention.

Referring to FIG. 4, the OSD method according to the exemplary embodiment of the present invention may include a decoding step, a line width calculating step, an interpolation rate calculating step, an image generating step, an image combining step, and an outputting step.

Meanwhile, in the OSD method according to the exemplary embodiment of the present invention, the first data generated by encoding an OSD image and stored in a separate storing unit are used.

Here, the first data may be data generated by encoding the OSD image in an MRLC format including color information, a data width, and a blank width.

Further, in order to naturally display the OSD image and an image photographed by the camera 110 in a finally output image, vertical synchronization (V sync) may also be performed.

First, in the decoding step, the first data are decoded to generate second data (S120).

Next, in the line width calculating step, a line width of the OSD image is calculated from the second data (S130).

Here, in the case in which the first data are data generated by encoding the OSD data in the MRLC format, the line width may be calculated by easily extracting color information and a width of data having the corresponding color information from the second data.

Then, in the interpolation rate calculating step, on which region in the OSD image and at which rate the interpolation is performed in order to smoothly display the OSD image is determined (S140).

Thereafter, in the image generating step, the OSD image is interpolated according to the interpolation rate calculated in the interpolation rate calculating step to generate an OSD image to be output to an actual screen (S150).

Next, in the image combining step, the image generated in an image generating unit is combined with an image photographed in a camera (S160).

Finally, in the outputting step, the image combined in the image combining step (S160) is output through a displaying unit that may be implemented by various types of display devices such as an LCD, an LED, a PDP, and the like, to thereby be provided to a driver (S170).

Meanwhile, in the above-mentioned decoding step (S120), a scaling process of increasing or decreasing a data width and a blank width in the second data at a predetermined rate to generate third data may be further performed.

In this case, in the line width calculating step (S130), a line width of the OSD image according to the third data is calculated.

FIG. 5 is a view schematically showing an OSD image to which the OSD device according to the exemplary embodiment of the present invention or the OSD method according to the exemplary embodiment of the present invention is applied.

Referring to FIG. 5, it may be confirmed that the OSD image (GL) may be more smoothly and naturally displayed as compared to the OSD image shown in FIG. 1.

As set forth above, according to the exemplary embodiments of the present invention, the OSD image is smoothly displayed to reduce the  image shaking, thereby making it possible to provide an image smoother as compared to the case according to the related art.

The present invention has been described in connection with what is presently considered to be practical exemplary embodiments. Although the exemplary embodiments of the present invention have been described, the present invention may be also used in various other combinations, modifications and environments. In other words, the present invention may be changed or modified within the range of concept of the invention disclosed in the specification, the range equivalent to the disclosure and/or the range of the technology or knowledge in the field to which the present invention pertains. The exemplary embodiments described above have been provided to explain the best state in carrying out the present invention. Therefore, they may be carried out in other states known to the field to which the present invention pertains in using other inventions such as the present invention and also be modified in various forms required in specific application fields and usages of the invention. Therefore, it is to be understood that the invention is not limited to the disclosed embodiments. It is to be understood that other embodiments are also included within the spirit and scope of the appended claims.

**Claims**

1. An on-screen display (OSD) device comprising:

    a camera;
    a storing unit storing first data therein, the first data being generated by encoding an OSD image;
    a decoder connected to the storing unit and decoding the first data;
    a line width calculating unit connected to the decoder and calculating a line width of the OSD image from second data generated by decoding the first data;
    an interpolation rate calculating unit connected to the line width calculating unit and reflecting the line width calculated in the line width calculating unit to calculate an interpolation rate;
    an image generating unit connected to the interpolation calculating unit and interpolating the OSD image according to the interpolation rate calculated in the interpolation rate calculating unit to generate an interpolated image;
    an image combining unit connected to the image generating unit and the camera and combining the image generated in the image generating unit with an image photographed in the camera; and
    a displaying unit connected to the image combining unit and outputting the image combined in the image combining unit.

2. The OSD device according to claim 1, wherein the first data are data generated by encoding the OSD image in an MRLC format including color information, a data width, and a blank width.

3. The OSD device according to claim 2, wherein the line width calculating unit calculates the line width by extracting color information and a width of data having the corresponding color information from the second data.

4. The OSD device according to claim 1, wherein the interpolation rate calculating unit calculates a width of an interpolation target region using the following Equation 1:

    $Y2 = LW - (LW/K1)$, where Y2 indicates the width of the interpolation target region, LW indicates the line width calculated in the line width calculating unit, and K1 indicates a first coefficient.

5. The OSD device according to claim 4, wherein the interpolation rate calculating unit calculates the interpolation rate so that a color is gradually weakened toward a direction that becomes distant from the center of a line of the OSD image with respect to the

**6.** The OSD device according to claim 5, wherein the first coefficient is determined to be in inverse proportion to the line width in a range between 1 and 2.

**7.** An OSD device comprising:

a camera;
a storing unit storing first data therein, the first data being generated by encoding an OSD image in an MRLC format including color information, a data width, and a blank width;
a decoder connected to the storing unit and decoding the first data;
a scaler connected to the decoder and increasing or decreasing a data width and a blank width in second data generated by decoding the first data to generate third data;
a line width calculating unit connected to the scaler and calculating a line width of the OSD image from the third data;
an interpolation rate calculating unit connected to the line width calculating unit and reflecting the line width calculated in the line width calculating unit to calculate an interpolation rate;
an image generating unit connected to the interpolation calculating unit and interpolating the OSD image according to the interpolation rate calculated in the interpolation rate calculating unit to generate an interpolated image;
an image combining unit connected to the image generating unit and the camera and combining the image generated in the image generating unit with an image photographed in the camera; and
a displaying unit connected to the image combining unit and outputting the image combined in the image combining unit.

**8.** The OSD device according to claim 7, wherein the line width calculating unit calculates the line width by extracting color information and a width of data having the corresponding color information from the third data.

**9.** The OSD device according to claim 7, wherein the interpolation rate calculating unit calculates a width of an interpolation target region using the following Equation 1:

$Y2 = LW - (LW/K1)$, where Y2 indicates the width of the interpolation target region, LW indicates the line width calculated in the line width calculating unit, and K1 indicates a first coefficient, and
the interpolation rate calculating unit calculates the interpolation rate so that a color is gradually weakened toward a direction that becomes distant from the center of a line of the OSD image with respect to the interpolation target region.

**10.** The OSD device according to claim 9, wherein the first coefficient is determined to be in inverse proportion to the line width in a range between 1 and 2.

**11.** An OSD method comprising:

a storing step of storing first data generated by encoding an OSD image;
a decoding step of decoding the first data to generate second data;
a line width calculating step of calculating a line width of the OSD image from second data;
an interpolation rate calculating step of reflecting the line width calculated in the line width calculating step to calculate an interpolation rate;
an image generating step of interpolating the OSD image according to the interpolation rate calculated in the interpolation rate calculating step to generate an interpolated image;
an image combining step of combining an image photographed by a camera and the image generated in the image generating step with each other; and
a displaying step of outputting the image combined in the image combining step.

**12.** The OSD method according to claim 11, wherein the first data are data generated by encoding the OSD image in an MRLC format including color information, a data width, and a blank width.

**13.** The OSD method according to claim 12, wherein in the line width calculating step, the line width is calculated by extracting color information and a width of data having the corresponding color information from the second data.

**14.** The OSD method according to claim 11, wherein in the interpolation rate calculating step, a width of an interpolation target region is calculated using the following Equation 1:

$Y2 = LW - (LM/K1)$, where Y2 indicates the width of the interpolation target region, LW indicates the line width calculated in the line width calculating unit, and K1 indicates a first coefficient.

**15.** The OSD method according to claim 14, wherein in the interpolation rate calculating step, the interpolation rate is calculated so that a color is gradually weakened toward a direction that becomes distant from the center of a line of the OSD image with respect to the interpolation target region.

**16.** The OSD method according to claim 15, wherein the first coefficient is determined to be in inverse proportion to the line width in a range between 1 and 2.

**17.** An OSD method comprising:

a storing step of storing first data therein generated by encoding an OSD image in an MRLC format including color information, a data width, and a blank width;
a decoding step of decoding the first data to generate second data;
a scaling step of increasing or decreasing a data width and a blank width in the second data to generate third data;
a line width calculating step of calculating a line width of the OSD image from the third data;
an interpolation rate calculating step of reflecting the line width calculated in the line width calculating step to calculate an interpolation rate;
an image generating step of interpolating the OSD image according to the interpolation rate calculated in the interpolation rate calculating step to generate an interpolated image;
an image combining step of combining an image photographed by a camera and the image generated in the image generating step with each other; and
a displaying step of outputting the image combined in the image combining step.

**18.** The OSD method according to claim 17, wherein in the line width calculating step, the line width is calculated by extracting color information and a width of data having the corresponding color information from the third data.

**19.** The OSD method according to claim 17, wherein in the interpolation rate calculating step,
a width of an interpolation target region is calculated using the following Equation 1:

$Y2 = LW - (LW/K1)$, where Y2 indicates the width of the interpolation target region, LW indicates the line width calculated in the line width calculating unit, and K1 indicates a first coefficient, and
the interpolation rate is calculated so that a color is gradually weakened toward a direction that becomes distant from the center of a line of the OSD image with respect to the interpolation target region.

**20.** The OSD method according to claim 20, wherein the first coefficient is determined to be in inverse proportion to the line width in a range between 1 and 2.

【FIG. 1】

【FIG. 2】

【FIG. 3】

| C | DW | BW | | | | | | | |
|---|---|---|---|---|---|---|---|---|---|
| Color Infor (Byte) | Date Width | Blank Width | · · · · | Blank Width | Color Infor (Byte) | Date Width | · · · · | Date Width |

EP 2 669 887 A2

【FIG. 4】

START

VERTICAL SYNCHRONIZATION — S110

DECODING/SCALING — S120

CALCULATE LINE WIDTH — S130

CALCULATE INTERPOLATION RATE — S140

GENERATE IMAGE — S150

COMBINE IMAGES WITH EACH OTHER — S160

OUTPUT — S170

END

【FIG. 5】

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020120057541
- KR 1020100038981
- KR 1020100006845
- KR 1020100129965